# EUROPÄISCHE PATENTSCHRIFT

(11) **EP 1 533 068 B1**
(45) Veröffentlichungstag und Bekanntmachung des Hinweises auf die Patenterteilung: **12.03.2008**
(21) Anmeldenummer: 04026531.6
(22) Anmeldetag: 09.11.2004
(51) Int. Cl.: B23K 26/08

(54) **Laserperforation**
Laser perforation
Perforation laser

(30) Priorität: 21.11.2003 DE 10354743
(43) Veröffentlichungstag der Anmeldung: 25.05.2005
(73) Patentinhaber: Hauni Maschinenbau AG, 21033 Hamburg (DE)
(72) Erfinder: Grassmel, Ralf, 21635 Jork (DE); Lange, Norbert, 21509 Glinde (DE)
(74) Vertreter: Meier, Frank

(56) Entgegenhaltungen:
- EP-A- 0 402 684
- EP-A- 0 761 107
- DE-A1- 10 111 667
- GB-A- 2 260 256
- US-A- 4 281 670
- US-A- 4 585 919

## Beschreibung

Die Erfindung betrifft ein Verfahren und eine Vorrichtung zur Perforation von stabförmigen Artikeln der tabakverarbeitenden Industrie.

Unter stabförmigen Artikeln der tabakverarbeitenden Industrie werden hier insbesondere Einzelzigaretten, Doppelfilterzigaretten, Zigarettenfilter oder Tabakstöcke für Zigaretten, bspw. Tabakstöcke aus Schnitttabak, verstanden.

Die eingangs genannten Verfahren und Vorrichtungen sind aus dem Stand der Technik bekannt. Mit solchen Verfahren und Vorrichtungen können beispielsweise sogenannte belüftete Zigaretten erzeugt werden. Dies sind Zigaretten, die im Bereich ihres Filters mit einer Vielzahl von Perforationen versehen sind, die es dem Raucher gestatten, zusammen mit dem Tabakrauch einen gewissen Anteil von Umgebungsluft zu inhalieren. Dies hat zum einen den Vorteil des Verdünnens des inhalierten Tabakrauchs und zum anderen den Vorteil der Reduzierung der Rauchtemperatur und somit des Nikotin- und Teergehalts im Rauch.

Die US 4,281,670 zeigt beispielsweise ein Verfahren, bei dem die zu perforierenden Zigaretten zum Drehen um ihre Längsachse zwischen dem Außenumfang der sie tragenden Förderwalze und einer entsprechend konkav verlaufenden Außenfläche eines stationären Stützblockes abgerollt werden, wobei die Zigaretten bereits vor dem Passieren des durch eine Durchtrittsöffnung im Stützblock hindurchtretenden Laserstrahlbündels aus dem am Umfang der umlaufenden Förderwalze angeordneten Auflagerstellen herausgerollt und auch nach dem Passieren des Laserstrahlenbündels noch zwischen der Förderwalze und dem Stützblock gerollt werden. Da dieses Rollen unter hinreichendem Anpressdruck zwischen der Förderwalze und dem Stützblock erfolgen muss und die Zigaretten angesichts der heutigen hohen Maschinengeschwindigkeiten in diesem Bereich eine sehr hohe Durchlaufgeschwindigkeit aufweisen, kommt es zu einer unerwünschten mechanischen Strapazierung der Zigaretten.

Es existieren daher Vorrichtungen, die diese Strapazen zu vermeiden suchen. So zeigt beispielsweise die DE 33 13 064 A1 eine Vorrichtung, bei der die Zigaretten in über den Außenumfang einer zylindrischen Walze verteilten Mulden angeordnet sind. Die Walze ist über eine Hohlwelle angetrieben, in der eine weitere Hohlwelle drehbar gelagert ist. Diese innere Hohlwelle enthält in einem außerhalb der Außenwelle liegenden Endabschnitt einen Strahlenteiler, sowie einem diesen nachgeordneten Spiegel, denen jeweils eine Fokussierlinse zugeordnet ist. Diese Fokussierlinsen sind ebenso wie der Strahlenteiler und der Spiegel innerhalb des betreffenden Endabschnittes der inneren Hohlwelle angeordnet. Die am anderen Ende der Hohlwellen angeordnete Laserlichtquelle liefert einen pulsierenden Laserstrahl, der innerhalb der inneren Hohlwelle verläuft. Durch den Strahlenteiler und den Spiegel wird dieser pulsierende Laserstrahl am anderen Ende der inneren Hohlwelle in zwei Teilstrahlen aufgeteilt, die durch einen in der Welle vorgesehenen Schlitz auf den freiliegenden Filter einer jeweiligen Einzelzigarette gerichtet werden. Die innere Hohlwelle dreht dabei in gleicher Richtung, aber mit einer höheren Frequenz als die Förderwalze, so dass die Einzelzigaretten während einer Umdrehung der inneren Hohlwelle jeweils nacheinander jeweils ein Loch erhalten.

Nachteilig bei dieser bekannten Vorrichtung ist es jedoch, dass nur Einzelzigaretten perforiert werden können.

Der gleiche Nachteil ist bei einer aus der DE 35 101 19 C2 bekannten Vorrichtung der eingangs genannten Art zu beobachten. Aus dieser Druckschrift ist eine Vorrichtung zum Bohren von Löchern in Zigaretten bekannt, bei der ein Laserstrahl mit Hilfe einer Streulinse aufgefächert wird, um eine Mehrzahl von Sammellinsen zu treffen, die jeweils einer Mulde einer Anzahl von auf einer Fördertrommel drehbar angeordneten Mulden zugeordnet sind.

Aus der US 4.585.919 ist eine Vorrichtung zur Perforation von Zigaretten oder ähnlichen Rauchwarenartikeln bekannt, bei der eine um eine Rotationsachse rotierende, die Zigaretten quer axial auf ihrem Umfang tragende Trommel zum Fördern der Zigaretten vorgesehen ist, bei der ein reflektierendes Element zum Reflektieren des Strahls auf ein zweites reflektierendes Element und von diesem auf ein weiteres reflektierendes Element vorgesehen ist, wobei letzteres den Strahl in eine parallel zum Trommelumfang verlaufende Richtung lenkt und der Strahl schließlich von kreisförmig aufgehängten Spiegeln erneut außerhalb des Trommelumfangs in eine im wesentlichen senkrecht zum Trommelumfang verlaufende Richtung zur Perforation der Artikel umgelenkt wird.

Aufgabe der vorliegenden Erfindung ist es, Verfahren und Vorrichtungen der eingangs genannten Art zu verbessern.

Diese Aufgabe wird erfindungsgemäß durch ein Verfahren gemäß Anspruch 1 und durch eine Vorrichtung gemäß Anspruch 20 gelöst.

Ausführungsformen der Erfindung vermeiden insbesondere die Nachteile des vorstehend genannten Standes der Technik. So vermeiden Ausführungsformen der Erfindung das Rollen der Zigaretten zwischen einer Förderwalze und einem Stützblock und/oder die Beschränkung auf die Perforation von Einzelzigaretten.

Die Erfindung schließt die Erkenntnis ein, dass Verfahren und Vorrichtungen der eingangs genannten Art immer auch zur Perforation von Doppelfilterzigaretten geeignet sein müssen und dies auf wirtschaftlich vernünftige Weise nur durch eine Perforation mit Hilfe eines von außen auf eine Trommel zum Fördern der Artikel gerichteten energiereichen Strahls möglich ist.

Bevorzugt sind Mittel vorgesehen, die den Strahl im wesentlichen senkrecht zur Rotationsachse zur Verfügung stellen. Weiter bevorzugt weisen die Mittel eine erste, vorteilhaft raumfeste, Zylinderlinse auf, die den Strahl auf eine im wesentlichen in der Rotationsachse liegende Linie fokussiert. Erfindungsgemäß weisen die Ausrichtmittel einen mit seinen Oberflächen im wesentlichen durch die Rotationsachse der Trommel und um eine zur Rotationsachse der Trommel parallele Achse rotierbaren Polygonspiegel zum Ausrichten des Strahls von der Rotationsachse ausgehend nach außen und zum Verschwenken des Strahls um die Rotationsachse auf, wobei der Polygonspiegel entgegen der Rotationsrichtung der Trommel rotierbar sein sollte. Auf diese Weise lässt sich die Erfindung besonders zuverlässig und einfach verwirklichen.

Erfindungsgemäß ist zusätzlich mindestens eine Optik zum Abbilden des von der Rotationsachse ausgehenden Strahls vorgesehen, bei der der Fokus der Optik im wesentlichen auf der in der Rotationsachse liegenden Linie liegt, wobei die Optik eine zweite, bevorzugt raumfeste, Zylinderlinse aufweist zum Umformen einer Schwenkbewegung des Strahls um die Rotationsachse in eine Parallelverschiebung des Strahls, Dadurch wird vorteilhaft sichergestellt, dass die Strahleigenschaften des Strahls, wie beispielsweise Zweireihigkeit des Strahls, Strahldurchmesser und Polarisation, erhalten bleiben.

Bei der Erfindung ist eine Fokussieroptik zum Fokussieren des in Richtung auf den Trommelumfang umgelenkten Strahls auf mindestens einen im wesentlichen raumfesten Brennpunkt vorgesehen. Der Brennpunkt ist dabei derart positioniert, dass die von der Trommel auf ihrem Umfang getragenen Artikel derart durch den Brennpunkt hindurchgefördert werden können, dass von dem Strahl ein Loch in die Artikel perforierbar ist. Die zweite Zylinderlinse und die Fokussieroptik sind erfindungsgemäß derart ausgebildet und aufeinander abgestimmt, dass durch die von der zweiten Zylinderlinse erzeugte Parallelverschiebung des Strahls von der Fokussieroptik mindestens zwei, bevorzugt fünf, in Rotationsrichtung der Trommel hintereinander liegende Brennpunkte erzeugbar sind. Vorteilhafterweise wird der Strahl zwischen den Brennpunkten abgeschaltet.

Von Vorteil ist auch, wenn die Rotationsgeschwindigkeiten von Polygonspiegel und Trommel, der Umfang der Trommel und der Abstand der Artikel auf dem Umfang der Trommel und die Anzahl der Facetten des Polygonspiegels derart aufeinander abgestimmt sind, dass während einer Verschwenkbewegung des Strahls während des Aufenthalts des Strahls auf einer Facette des rotierenden Polygonspiegels nur der erste, dritte, fünfte, usw. Artikel in dem während dieser Verschwenkbewegung von dem Strahl überstrichenen Winkelbereich perforiert wird, so dass die auf die perforierten Artikel jeweils nachfolgenden Artikel erst während einer darauffolgenden Verschwenkbewegung auf der darauffolgenden Facette des Polygonspiegels perforierbar sind.

Dabei sollte sichergestellt sein, dass die Abstimmung derart ist, dass die während der bestimmten Verschwenkbewegung des Strahls nicht perforierten Artikel, frühestens bis zum Beginn der darauffolgenden Verschwenkbewegung, jedoch spätestens beim Eintreffen des Artikels unter der für den direkt vorauseilenden Artikel verwendeten Fokussieroptik, unter jeweils die zuvor für den direkt vorauseilenden Artikel aktiven Fokussieroptiken gefördert werden, um ihrerseits perforiert zu werden.

Die Abstimmung sollte so sein, dass jeder durch den mindestens einen raumfesten Brennpunkt einer Fokussieroptik hindurch geförderte Artikel an diesem Brennpunkt perforiert wird.

Um die Artikel auf ihrem Umfang gleichmäßig zu perforieren, kann ein Rotationsmittel zum Rotieren der Artikel, bevorzugt einmal, weiter bevorzugt dreimal um 360°, um ihre Längsachse während des Aufenthalts der Artikel auf der Trommel vorgesehen werden. Diese Rotationsmittel sollten so auf die anderen Elemente der Vorrichtung abgestimmt werden, dass der Strahl um die Rotationsachse um einen bestimmten Winkel verschwenkt wird, während mit Hilfe der Rotationsmittel die Artikel während ihres Aufenthalts in dem dem bestimmten Winkel entsprechenden Verschwenkbereich des Strahls mindestens um 360° um ihre Längsachse rotierbar sind, so dass unter jeder Fokussieroptik ein anderer Umfangsabschnitt der Artikel perforierbar ist, um schließlich den gesamten Umfang des Artikels perforieren zu können.

Der zum Perforieren verwendete Strahl kann einen i.w. kreisförmigen oder alternativ einen ovalen Querschnitt aufweisen.

Weitere bevorzugte Ausführungsformen der Erfindung sind in den Unteransprüchen angegeben.

Ein bevorzugtes Ausführungsbeispiel der Erfindung wird nun anhand der begleitenden Zeichnungen beschrieben. Die Zeichnungen zeigen:
- Figur 1: eine schematische perspektivische Ansicht einer Ausführungsform einer erfindungsgemäßen Vorrichtung;
- Figur 2: ein Detail der Ausführungsform der Figur 1;
- Figur 3: die Ausführungsform der Figur 1 in einer Seitenansicht;

- Figur 4: eine Vorderansicht der Ausführungsform der Figur 1;
- Figur 5: die Ansicht der Figur 4 bei weiter rotiertem Polygonspiegel;
- Figur 6: eine schematische Darstellung der Funktionsweise der Ausführungsform der Figur 1; und
- Figur 7: die schematische Darstellung der Figur 6 in fortgeschrittenem Zustand.

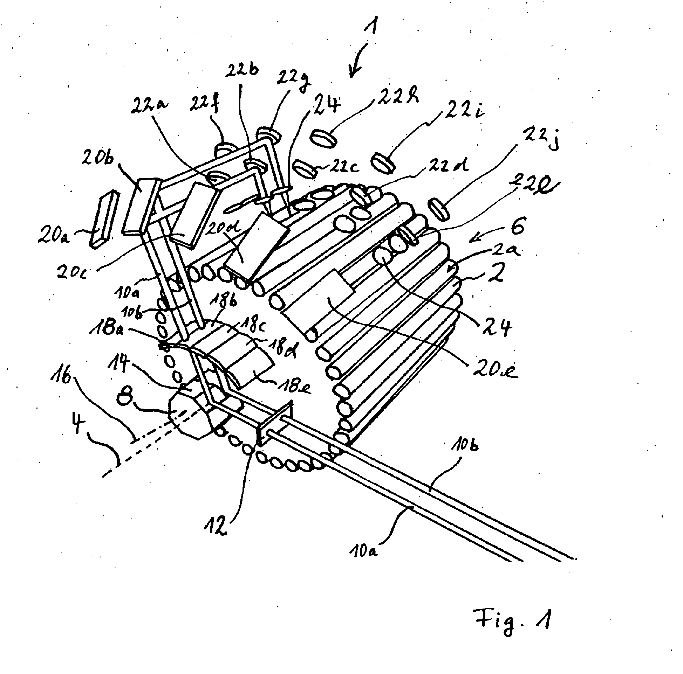

Figur 1 zeigt eine schematische perspektivische Ansicht einer ersten Ausführungsform 1 einer erfindungsgemäßen Vorrichtung zur Perforation von stabförmigen Artikeln, hier Zigaretten 2, der tabakverarbeitenden Industrie.

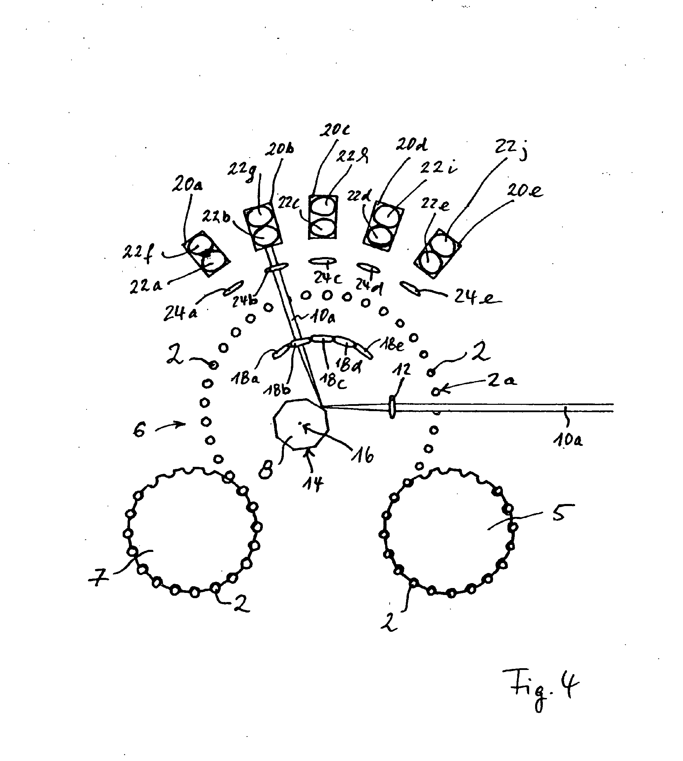

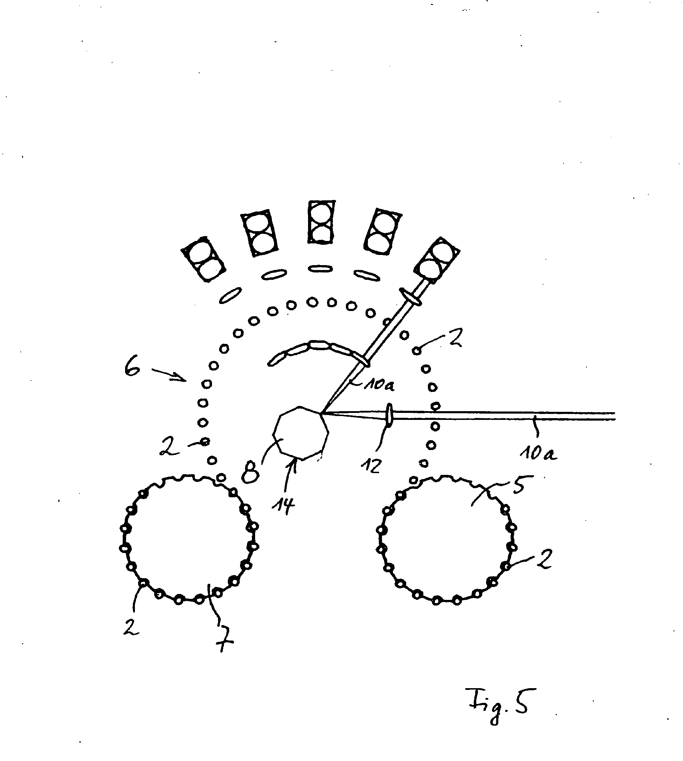

Die Vorrichtung 1 weist eine um eine Rotationsachse 4 im Gegenuhrzeigersinn rotierbare, die Zigaretten 2 queraxial auf ihrem Umfang tragende Trommel 6 zum queraxialen Fördern der Zigaretten 2 auf. Die Trommel 6 liegt zwischen einer in den Fig. 4 und 5 rechts unten von der Trommel 6 dargestellten Zufördertrommel 5 zum Zufördern der Zigaretten 2 zu der Trommel 6 und einer in den Fig. 4 und 5 links unten von der Trommel 6 dargestellten Abfördertrommel 7 zum Abnehmen und Abfördern der Zigaretten 2 von der Trommel 6.

Die Vorrichtung 1 weist weiterhin ein als Polygonspiegel 8 ausgebildetes Ausrichtmittel zum Ausrichten von zwei zur Perforation der Zigaretten 2 geeigneten energiereichen Laserstrahlen 10a und 10b von der Rotationsachse 4 ausgehend radial nach außen auf. Zu diesem Zweck weist der Polygonspiegel 8 acht gleich große Facetten 14 auf und ist um eine zur Rotationsachse 4 der Trommel 6 parallele Achse 16 rotierbar. Dabei ist die Achse 16 so angeordnet, dass die Facetten 14 des Polygonspiegels 8 im Mittel im wesentlichen durch die Rotationsachse 4 der Trommel 6 rotierbar sind. Der Polygonspiegel 8 ist im Uhrzeigersinn und somit entgegen der Rotationsrichtung der Trommel 6 rotierbar.

Die zwei zur Perforation der Zigaretten 2 geeigneten energiereichen Laserstrahlen 10a und 10b sind von einem nicht dargestellten CO₂-Laser erzeugbar. Die Laserstrahlen 10a, 10b werden gepulst zur Verfügung gestellt. Der Laserstrahl 10a ist in der Figur 1 vorne dargestellt, während der Laserstrahl 10b in der Figur 1 hinten liegend dargestellt ist.

Zwischen dem CO₂-Laser und dem Polygonspiegel 8 befindet sich im Strahlengang des Strahlen 10a, 10b eine erste raumfest angeordnete Zylinderlinse 12, mit deren Hilfe die Strahlen 10a, 10b auf eine im wesentlichen in der Rotationsachse 4 liegende Linie fokussierbar sind. Somit sind die Facetten 14 durch den Fokus der ersten Zylinderlinse 12 rotierbar.

Fünf als Optiken zum Abbilden der von der Rotationsachse 4 ausgehenden Strahlen 10a und 10b dienende Zylinderlinsen 18a, 18b, 18c, 18d und 18e sind nebeneinander bogenförmig um die Rotationsachse 4 herum in gleichem Abstand zur Rotationsachse 4 angeordnet. Die Zylinderlinsen 18a bis 18e sind so ausgebildet, dass sie eine durch eine Rotation des Polygonspiegels 8 verursachte Schwenkbewegung der Laserstrahlen 10a, 10b um die Rotationsachse 4 in eine Parallelverschiebung entlang der Oberflächen der Zylinderlinsen 18a bis 18e umformen. Ein durch die Facetten 14 des Polygonspiegels 8 verursachter Verschwenkbereich der Strahlen 10a, 10b von hier 90° wird durch die Zylinderlinsen 18a bis 18d abgedeckt.

Jeder Zylinderlinse 18a bis 18e ist wiederum ein raumfester, als erstes Umlenkmittel dienender und jeweils im 45° Winkel zum Trommelumfang ausgerichteter und außerhalb des Trommelumfangs angeordneter erster Umlenkspiegel 20a bis 20e zugeordnet. Mit diesen Umlenkspiegeln 20a bis 20e können die Strahlen 10a, 10b außerhalb des Trommelumfangs in eine im wesentlichen parallel zum Trommelumfang verlaufende Richtung umgelenkt werden.

Jedem ersten Umlenkspiegel 20a bis 20e sind wiederum raumfeste, als zweite Umlenkmittel dienende und jeweils im 45° Winkel zum Trommelumfang ausgerichtete und außerhalb des Trommelumfangs angeordnete zweiter Umlenkspiegel 22a bis 22j zugeordnet. Dabei dienen die zweiten Umlenkspiegel 22a bis 22e zum Umlenken des Strahls 10a in eine im wesentlichen senkrecht zum Trommelumfang verlaufende Richtung und die zweiten Umlenkspiegel 22f bis 22j zum Umlenken des Strahls 10b in eine im wesentlichen senkrecht zum Trommelumfang verlaufende Richtung.

Senkrecht zwischen den zweiten Umlenkspiegeln 22a bis 22j und dem Trommelumfang sind als Fokussieroptik zum Fokussieren eines jeweils in Richtung auf den Trommelumfang umgelenkten Strahls 10a, 10b sphärische Linsen 24 in etwa parallel zum Trommelumfang angeordnet. Die sphärischen Linsen 24 können die Strahlen 10a, 10b auf einen im wesentlichen raumfesten Brennpunkt fokussieren. Die sphärischen Linsen 24 und damit ihr Fokus sind dabei derart ausgebildet und positioniert, dass die von Trommel 6 auf ihrem Umfang getragenen Zigaretten 2 derart durch den von den sphärischen Linsen 24 erzeugten Brennpunkt hindurch förderbar sind, dass von den Strahlen 10a, 10b jeweils ein oder mehrere Löcher in die Zigaretten perforierbar ist.

Die Funktionsweise der Vorrichtung 1 ist wie folgt:

Die Laserstrahlen 10a und 10b werden von dem CO₂-Laser erzeugt und auf die erste raumfeste Zylinderlinse 12 gerichtet, die die Laserstrahlen 10a, 10b auf die im wesentlichen in der Rotationsachse 4 liegende Linie fokussiert.

Der Polygonspiegel 8 wirft mit seiner zu diesem Zeitpunkt im Fokus der Zylinderlinse 12 liegenden Facette 14 die auf diese Facette 14 auftreffenden Laserstrahlen 10a und 10b auf eine der fünf Zylinderlinsen 18a, 18b, 18c, 18d und 18e. In der Fig. 1 ist dies die Linse 18b.

Die Zylinderlinsen 18a bis 18e, in der Fig. 1 ist dies die Linse 18b, formen die durch die Rotation des Polygonspiegels 8 verursachte Schwenkbewegung der Laserstrahlen 10a, 10b um die Rotationsachse 4 herum in eine Parallelverschiebung entlang der Oberflächen der Zylinderlinsen 18a bis 18e, in der Fig. 1 ist dies die Linse 18b, um. Die Rotationsgeschwindigkeit des Polygonspiegels 8 und damit die Bewegung der Strahlen 10a, 10b durch die jeweiligen Zylinderlinsen 18a bis 18e hindurch sind so auf die Ein-/Ausschaltfrequenz der gepulsten Strahlen 10a und 10b abgestimmt, dass die Strahlen 10a, 10b während ihres Verschwenkens durch eine der Zylinderlinsen 18a bis 18e hindurch mehrfach, im dargestellten Beispiel fünfmal für eine Zeitdauer eingeschaltet werden können, die zum Einbringen einer Perforation in die Zigaretten 2 ausreichend ist. Während des Übergangs von einer Zylinderlinse 18a bis 18e zur nächsten wird der Laser und damit die Strahlen 10a, 10b ausgeschaltet.

Da der Polygonspiegel 8 insgesamt acht Facetten 14 aufweist, verschwenkt während der Rotation des Polygonspiegels 8 jede der Facetten 14 die Strahlen 10a und 10b um jeweils 90° im Uhrzeigersinn während die Strahlen 10a und 10b sich auf dieser Facette 14 befinden.

Die ersten Umlenkspiegel 20a bis 20e lenken die Strahlen 10a, 10b außerhalb des Trommelumfangs in eine im wesentlichen parallel zum Trommelumfang verlaufende Richtung um. Anschließend wird der Strahl 10a von den zweiten Umlenkspiegeln 22a bis 22e, in der Fig. 1 der Spiegel 22b, und der zweite Laserstrahl 10b von den zweiten Umlenkspiegeln 22f bis 22j, in der Fig. 1 der Spiegel 22g, in eine im wesentlichen senkrecht zum Trommelumfang verlaufende Richtung umgelenkt.

Anschließend werden die so senkrecht auf den Trommelumfang umgelenkten Laserstrahlen 10a und 10b von den Linsen 24 auf die Umfangsoberflächen 2a der auf der Trommel 6 rotierenden Zigaretten 2 zur Perforation der Umfangsoberflächen 2a fokussiert.

Figur 1 zeigt beispielhaft die Situation, in der die Laserstrahlen 10a, 10b von dem Polygonspiegel 8 auf die Zylinderlinse 18b, von dort auf den Umlenkspiegel 20b und von diesem auf die Umlenkspiegel 22b und 22g und von diesen auf die sphärischen Linsen 24 fokussiert werden. Durch die Rotation des Polygonspiegels 8 verändert sich jedoch der Auftreffwinkel der Laserstrahlen 10a, 10b auf eine der acht Facetten 14 des Polygonspiegels 8 derart, dass die Laserstrahlen 10a, 10b um 90° um die Rotationsachse 4 herum durch alle Zylinderlinsen 18a bis 18e und somit auch durch alle Umlenkspiegel 20a bis 20e, durch alle zweiten Umlenkspiegel 22a bis 22j und auch durch alle Fokussierlinsen 24 hindurch verschwenkt werden und so nach und nach alle unter den Fokussierlinsen 24 hindurch geförderten Zigaretten 2 perforieren.

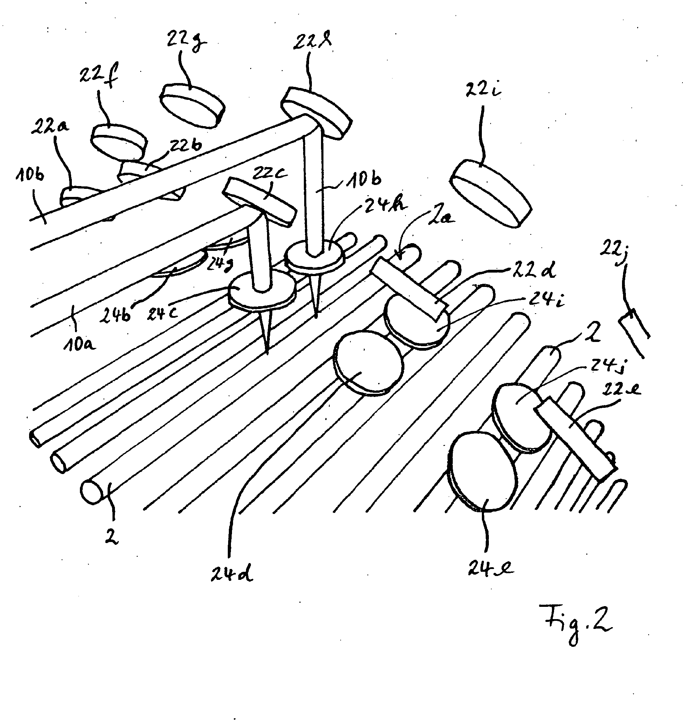

Figur 2 zeigt in Grossaufnahme den Bereich der zweiten Umlenkspiegel 22a bis 22j. Dabei sind die Laserstrahlen 10a, 10b wegen fortgeschrittener Rotation des Polygonspiegels 8 in einer im Uhrzeigersinn gemäß Figur 1 weiter fortgeschritten verschwenkten Position dargestellt, in der sie durch die in der Figur 2 nicht dargestellte Zylinderlinse 18c auf den ebenfalls in der Figur 2 nicht dargestellten Umlenkspiegel 20c auf die Umlenkspiegel 22c (Strahl 10a) und 22h (Strahl 10b) gelenkt und von dort über die Linsen 24c (Strahl 10a) und 24h (Strahl 10b) auf die Umfangsoberfläche 2a einer Zigarette 2 fokussiert werden, um die Umfangsoberfläche 2a zu perforieren.

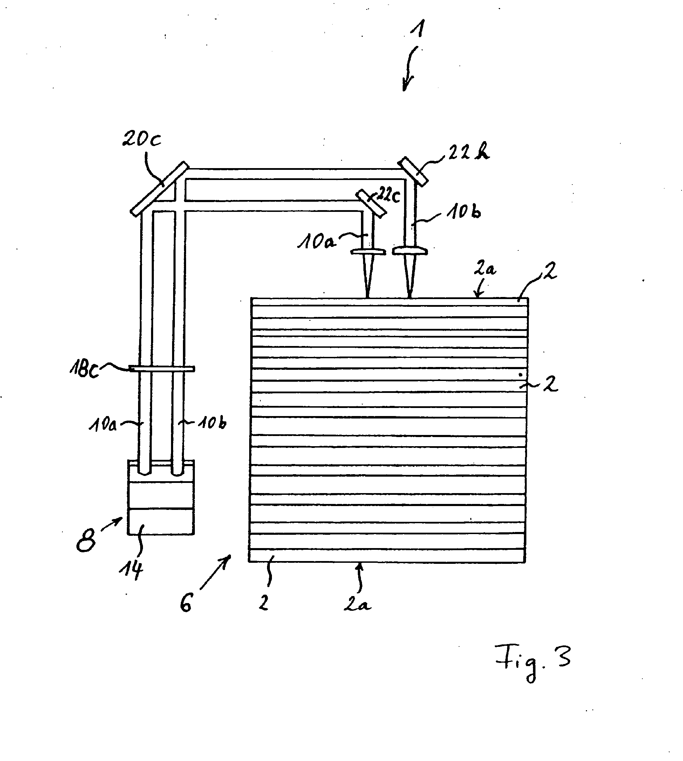

Figur 3 zeigt eine Seitenansicht der Vorrichtung 1 der Figur 1 in der in der Figur 2 dargestellten Situation.

Figur 4 zeigt eine Frontansicht der Vorrichtung 1 der Figur 1 in der in der Figur 1 dargestellten Situation.

Figur 5 zeigt einen gegenüber der Figur 2 noch weiter fortgeschrittenen Zustand, in dem der Polygonspiegel 8 noch weiter im Uhrzeigersinn rotiert ist, so dass die Laserstrahlen 10a, 10b an den Rand derjenigen Facette 14 gekommen sind, mit der sie von der in den Figuren 1 bzw. 4 dargestellten Position auf die in der Figur 2 dargestellte Position und schließlich auf die Figur 5 dargestellte Position verschwenkt wurden.

Wird der Polygonspiegel 8 aus der in der Figur 5 dargestellten Position weiter im Uhrzeigersinn rotiert, so gelangt der Strahl 10a, 10b auf die nächste Facette 14 des Polygonspiegels 8.

Da diese nächste Facette 14 dem Strahl 10a, 10b in einem flacheren Winkel erscheint, springt der Laserstrahl 10a, 10b beim Übergang auf diese nächste Facette 14 von der in der Figur 5 dargestellten Position um 90° im Gegenuhrzeigersinn zurück.

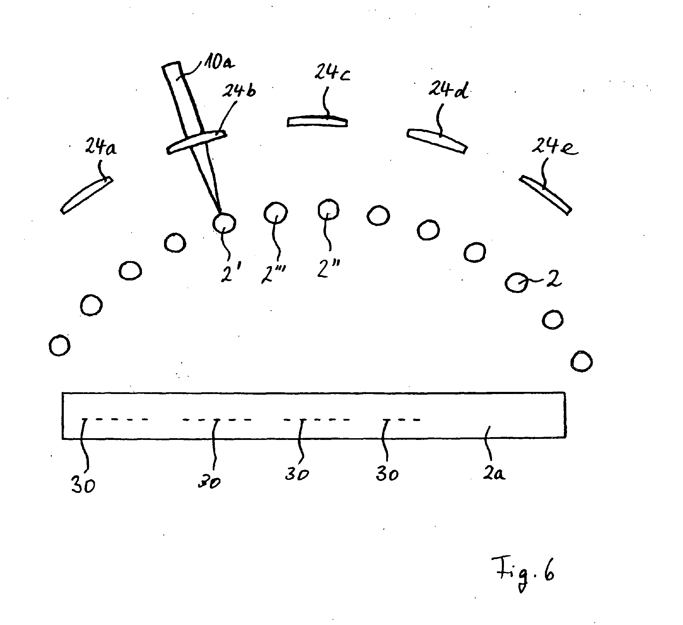

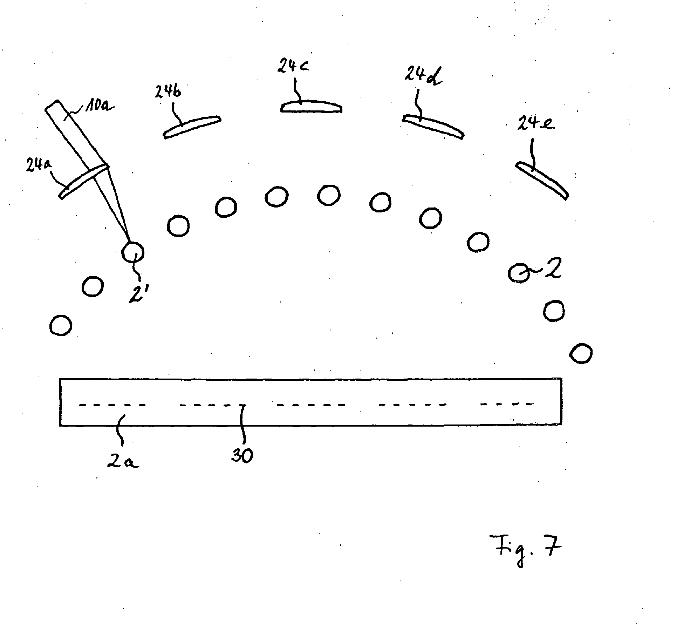

Die Funktionsweise der Vorrichtung 1 der Figur 1 sei nun anhand der schematischen Darstellungen der Figuren 6 und 7 noch genauer wie folgt erläutert:

Die Figuren 6 und 7 zeigen jeweils in ihrem oberen Teil eine schematische Darstellung der auf dem Trommelumfang der Trommel 6 geförderten Zigaretten 2 und eine schematische Darstellung der Linsen 24 und des Strahls 10a. Im unteren Teil der Figuren 6 und 7 ist jeweils die Umfangsoberfläche 2a einer jeweils gerade vom Strahl 10a bearbeiteten Zigarette 2' im abgewickelten Zustand zusammen mit bereits in diese Umfangsoberfläche 2a in die Zigarette 2 perforierten Löchern 30 dargestellt.

In der Figur 6 ist der in den Figuren 1 und 4 dargestellte Schwenkwinkel des Strahls 10a auf die Zylinderlinse 18b, den Umlenkspiegel 20b, den zweiten Umlenkspiegel 22b und somit auf die diesem zweiten Umlenkspiegel 22b zugeordnete Linse 24b dargestellt.

Zu diesem Zeitpunkt hat der sich gerade an dieser Stelle befindende Artikel 2' bereits die Brennpunkte der den Umlenkspiegeln 22e, 22d und 22c zugeordneten Linsen 24e bis 24c passiert. Aufgrund der von den Zylinderlinsen 18e, 18d und 18c verursachten Parallelverschiebung des während des Verschwenkens auf einer Zylinderlinse 18e, 18d und 18c fünfmal eingeschalteten Laserstrahls 10a hat die Umfangsoberfläche 2a des Artikels 2' während jedes Aufenthaltes unter einer der Linsen 24e, 24d und 24c jeweils fünf Löcher 30 einperforiert erhalten.

Zu dem in der Figur 6 dargestellten Zeitpunkt befindet sich der Artikel 2' nun unterhalb der in Förder- oder Rotationsrichtung der Trommel 6 gesehen vierten Fokussierlinse 24b. Zu diesem Zeitpunkt befindet sich auch der Laserstrahl 10a an dieser Stelle. Denn die Rotationsgeschwindigkeit der Trommel 6, die Rotationsgeschwindigkeit des Polygonspiegels 8, die Anzahl der Facetten 14 auf dem Polygonspiegel 8, der Abstand der Zigaretten 2 auf dem Umfang der Trommel 6 und der Umfang der Trommel 6 sind so aufeinander abgestimmt, dass immer eine Zigarette 2 unter einer Linse 24a, 24b, 24c, 24d, 24e ist, wenn der Strahl 10a sich auf dieser Linse 24a, 24b, 24c, 24d, 24e befindet. Weiterhin sind die Rotationsgeschwindigkeit der Trommel 6, die Rotationsgeschwindigkeit des Polygonspiegels 8, die Anzahl der Facetten 14 auf dem Polygonspiegel 8, der Abstand der Zigaretten 2 auf dem Umfang der Trommel 6 und der Umfang der Trommel 6 sind so aufeinander abgestimmt, dass jede Zigarette 2 unter jeder Linse 24a, 24b, 24c, 24d, 24e einmal, also hier insgesamt fünfmal mit jeweils fünf einzelnen Löchern 30 perforiert wird. Gemäß Figur 6 hat die durch den Polygonspiegel 8 verursachte Schwenkbewegung des Laserstrahls 10a im Bereich der Zylinderlinse 18b, die von der Zylinderlinse 18b in eine Parallelverschiebung umgesetzt wurde, bereits zu drei Löchern 30 in einem Abschnitt der Umfangsoberfläche 2a des Artikels 2' geführt.

Der Laserstrahl 10a wird nun durch die Schwenkbewegung des Polygonspiegels 8 und die Umformung dieser Schwenkbewegung in eine Parallelverschiebung durch die Zylinderlinse 18b noch weiter nach rechts auf der Linse 24b verschoben und wird auf diese Weise noch zwei weitere Löcher rechts neben den drei auf der Umfangsoberfläche 2a dargestellten Löchern 30 in die Umfangsoberfläche 2a des Artikels 2' perforieren.

Anschließend gelangt der Artikel 2' außerhalb des Bereichs der Linse 24b. Gleichzeitig verlässt auch der Laserstrahl 10a die in der Figur 6 dargestellte Linse 24b und wird von dem Polygonspiegel 8 weiter auf die im Uhrzeigersinn darauf folgende Linse 24c verschwenkt an der er den dann direkt unter die Linse 24 geförderten Artikel 2" perforieren wird.

Bis der zwischen den Artikeln 2' und 2" liegende Artikel 2"' unter die Linse 24b gefördert ist, ist der Laser 10a von dem Polygonspiegel 8 bereits bis zur Linse 24e im Uhrzeigersinn verschwenkt worden, ist auf die nächste Facette 14 des Polygonspiegels 8 gelangt und somit im - ausgeschalteten Zustand - im Gegenuhrzeigersinn auf seine auf der Linse 24a ganz links liegende Ausgangsposition zurück verschwenkt worden, von der Zylinderlinse 18a auf der Linse 24a im Uhrzeigersinn bis auf eine ganz rechts auf der Linse 24a liegende Position verschoben worden und zum Wechseln von der auf der Linse 24a ganz rechts liegenden Position auf die auf der Linse 24b ganz links liegende Position aus und wieder eingeschaltet worden. Sobald der Laser 10a an der Linse 24b angelangt ist, wird dann der Artikel 2"' von dem Laser 10a über die Linse 24b perforiert. Auf diese Weise wird jeder der Artikel 2 im Bereich jeder der Linsen 24a bis 24e jeweils fünfmal mit einem Loch 30 perforiert.

Gleichzeitig sind die Zigaretten 2 auf dem Umfang rotierbar gelagert. Dies kann beispielsweise auf eine der in der DE 3510119 C2 oder in der DE 3313064 C2 offenbarten Art und Weise geschehen. Durch die Rotation der Zigaretten 2 auf dem Umfang der Trommel 6 wird sichergestellt, dass die Zigaretten 2 unter jeder Linse 24a, 24b, 24c, 24d, 24e an einem anderen Abschnitt perforiert werden. Da die Artikel 2 somit gleichzeitig während ihres Weges auf dem Trommelumfang und unterhalb der Linsen 24a bis 24e einmal um 360° rotiert werden, entsteht ein gleichmäßig mit Löchern 30 versehenes Perforationsmuster auf der gesamten Umfangsoberfläche 2a der Artikel 2. Dies ergibt sich aus der Darstellung der Umfangsoberfläche 2a unten in den Figuren 6 und 7.

Die Figur 7 zeigt einen Zustand, in dem der Artikel 2' mit seiner Umfangsoberfläche 2a nahezu vollständig mit Löchern 30 auf seiner Umfangsoberfläche 2a perforiert ist. Die in der Figur 7 dargestellte Position zeigt die Position des Lasers 10a ganz rechts auf der Linse 24a unmittelbar vor dem Einbringen des letzten ganz rechts auf der Umfangsoberfläche 2a der Figur 7 noch fehlenden Lochs 30 in der Zigarette 2'.

## Patentansprüche

1. Verfahren zur Perforation von stabförmigen Artikeln (2, 2', 2", 2"') der tabakverarbeitenden Industrie, mit den Schritten:
die Artikel (2, 2', 2", 2"') werden queraxial mit einer um eine Rotationsachse (4) rotierenden, die Artikel (2, 2', 2", 2"') auf ihrem Umfang tragenden Trommel (6) gefördert,
mindestens ein zur Perforation der Artikel (2, 2', 2", 2"') geeigneter energiereicher Strahl (10a, 10b) wird zur Verfügung gestellt,
der Strahl (10a, 10b) wird von der Rotationsachse (4) ausgehend radial nach außen gerichtet,
der Strahl (10a, 10b) wird außerhalb des Trommelumfangs in eine im wesentlichen parallel zum Trommelumfang verlaufende Richtung umgelenkt, und
der Strahl (10a, 10b) wird außerhalb des Trommelumfangs zur Perforation der Artikel (2, 2', 2", 2"') in eine im wesentlichen senkrecht zum Trommelumfang verlaufende Richtung umgelenkt,
der auf den Trommelumfang umgelenkte Strahl (10a, 10b) wird von einer Fokussieroptik (24, 24a, 24b, 24c, 24d, 24e, 24f, 24g, 24h, 24i, 24j) auf mindestens einen im wesentlichen raumfesten Brennpunkt fokussiert, und
die Artikel (2, 2', 2", 2"') werden von der Trommel (6) derart durch den Brennpunkt hindurchgefördert, dass von dem Strahl (10a, 10b) ein Loch (30) in die Artikel (2, 2', 2", 2"') perforiert wird,
wobei der Strahl (10a, 10b) um die Rotationsachse (4) verschwenkt wird,
wobei der von der Rotationsachse (4) ausgehende Strahl (10a, 10b) von mindestens einer Optik (18a, 18b, 18c, 18d, 18e) abgebildet wird, deren Fokus im wesentlichen auf der in der Rotationsachse (4) liegenden Linie liegt,
wobei die Optik (18a, 18b, 18c, 18d, 18e) eine Schwenkbewegung des Strahls (10a, 10b)s um die Rotationsachse (4) in eine Parallelverschiebung des Strahls (10a, 10b) umformt,
wobei durch die Parallelverschiebung des Strahls (10a, 10b) von der Fokussieroptik (24, 24a, 24b, 24c, 24d, 24e, 24f, 24g, 24h, 24i, 24j) mindestens zwei, bevorzugt fünf, in Förderrichtung der Trommel (6) hintereinander liegende, bevorzugt leicht längliche, Brennpunkte erzeugt werden.

2. Verfahren nach Anspruch 1,
wobei der Strahl (10a, 10b) senkrecht zur Rotationsachse (4) zur Verfügung gestellt wird.

3. Verfahren nach einem der vorstehenden Ansprüche,
wobei der Strahl (10a, 10b) auf eine im wesentlichen in der Rotationsachse (4) liegende Linie fokussiert wird.

4. Verfahren nach einem der vorstehenden Ansprüche,
wobei der Strahl (10a, 10b) entgegen der Rotationsrichtung der Trommel (6) um die Rotationsachse (4) verschwenkt wird.

5. Verfahren nach dem vorstehenden Anspruch,
wobei während des Verschwenkens des Strahls (10a, 10b) zwischen den Brennpunkten der Strahl (10a, 10b) vorübergehend abgeschaltet wird.

6. Verfahren nach einem der vorstehenden Ansprüche,
wobei der Strahl (10a, 10b) um einen bestimmten Winkel, bevorzugt um mindestens 35°, weiter bevorzugt um mindestens 90°, um die Rotationsachse (4) verschwenkt wird.

7. Verfahren nach einem der vorstehenden Ansprüche,
wobei der von der Rotationsachse (4) ausgehende Strahl (10a, 10b) während eines Verschwenkens um einen bestimmten Winkel um die Rotationsachse (4) von mindestens zwei, bevorzugt von mindestens fünf, Optiken (18a, 18b, 18c, 18d, 18e) abgebildet wird, deren jeweiliger Fokus im wesentlichen auf der in der Rotationsachse (4) liegenden Linie liegt.

8. Verfahren nach dem vorstehenden Anspruch,
wobei der Strahl (10a, 10b) während des Verschwenkens von einer Optik (18a, 18b, 18c, 18d, 18e) zur nächsten vorübergehend abgeschaltet wird.

9. Verfahren nach einem der vorstehenden Ansprüche,
wobei der Strahl (10a, 10b) aus einer bestimmten Ausgangsposition heraus um einen bestimmten Winkel um die Rotationsachse (4) verschwenkt wird und nach dem Verschwenken um den bestimmten Winkel wieder an seine Ausgangsposition zurückverschwenkt wird.

10. Verfahren nach dem vorstehenden Anspruch,
wobei der Strahl (10a, 10b) zumindest während des Zurückschwenkens vorübergehend abgeschaltet wird.

11. Verfahren nach einem der vorstehenden Ansprüche,
wobei der Strahl (10a, 10b) um die Rotationsachse (4) um einen bestimmten Winkelbereich verschwenkt wird, und wobei während einer Verschwenkbewegung des Strahls (10a, 10b) nur jeder zweite Artikel (2, 2', 2", 2"') in dem bestimmten Winkelbereich perforiert wird, so dass die verbleibenden Artikel (2, 2', 2", 2"') erst während einer darauf folgenden Verschwenkbewegung des Strahls (10a, 10b) perforiert werden.

12. Verfahren nach einem der vorstehenden Ansprüche,
wobei der Strahl (10a, 10b) um die Rotationsachse (4) in einem bestimmten Winkelbereich verschwenkt wird, und wobei während einer bestimmten Verschwenkbewegung des Strahls (10a, 10b) durch die Fokussieroptiken (24, 24a, 24b, 24c, 24d, 24e, 24f, 24g, 24h, 24i, 24j) in diesem Winkelbereich nur jeder zweite Artikel (2, 2', 2", 2"') perforiert wird.

13. Verfahren nach dem vorstehenden Anspruch,
wobei die während der bestimmten Verschwenkbewegung des Strahls (10a, 10b) nicht perforierten Artikel (2, 2', 2", 2"'), frühestens bis zum Beginn der darauf folgenden Verschwenkbewegung, jedoch spätestens beim Eintreffen des Artikels (2, 2', 2", 2"') unter der für den direkt vorauseilenden Artikel (2, 2', 2", 2"') verwendeten Fokussieroptik (24, 24a, 24b, 24c, 24d, 24e, 24f, 24g, 24h, 24i, 24j), unter jeweils die zuvor für den direkt vorauseilenden Artikel (2, 2', 2", 2"') aktiven Fokussieroptiken (24, 24a, 24b, 24c, 24d, 24e, 24f, 24g, 24h, 24i, 24j) gefördert werden, um ihrerseits perforiert zu werden.

14. Verfahren nach einem der vorstehenden Ansprüche,
wobei jeder durch den mindestens einen raumfesten Brennpunkt einer Fokussieroptik (24, 24a, 24b, 24c, 24d, 24e, 24f, 24g, 24h, 24i, 24j) hindurch geförderte Artikel (2, 2', 2", 2"') an diesem Brennpunkt perforiert wird.

15. Verfahren nach einem der vorstehenden Ansprüche,
wobei der Strahl (10a, 10b) um die Rotationsachse (4) um einen bestimmten Winkel verschwenkt wird und die Artikel (2, 2', 2", 2"') während ihres Aufenthalts in dem dem bestimmten Winkel entsprechenden Verschwenkbereich des Strahls (10a, 10b) mindestens um 360° um ihre Längsachse rotiert werden, so dass unter jeder Fokussieroptik (24, 24a, 24b, 24c, 24d, 24e, 24f, 24g, 24h, 24i, 24j) ein anderer Umfangsabschnitt der Artikel (2, 2', 2", 2"') perforierbar ist.

16. Verfahren nach einem der vorstehenden Ansprüche,
wobei die Artikel (2, 2', 2", 2"') während ihres Aufenthalts auf der Trommel (6) mindestens einmal, bevorzugt dreimal, um 360° um ihre Längsachse rotiert werden.

17. Verfahren nach einem der vorstehenden Ansprüche,
wobei mindestens zwei im wesentlichen parallele Strahlen (10a, 10b) zur Verfügung gestellt werden, um mindestens zwei parallel verlaufende Perforationsspuren auf den Artikeln (2, 2', 2", 2''') zu erzeugen.

18. Verfahren nach dem vorstehenden Anspruch,
wobei die mindestens zwei Strahlen (10a, 10b) leicht konvergierend in die im wesentlichen senkrecht zum Trommelumfang verlaufende Richtung umgelenkt werden.

19. Verfahren nach einem der vorstehenden Ansprüche,
wobei der mindestens eine Strahl (10a, 10b) mit einem im wesentlichen kreisförmigen Querschnitt zur Verfügung gestellt wird.

20. Vorrichtung zur Perforation von stabförmigen Artikeln (2, 2', 2", 2"') der tabakverarbeitenden Industrie, mit:
einer um eine Rotationsachse (4) rotierenden, die Artikel (2, 2', 2", 2"') queraxial auf ihrem Umfang tragenden Trommel (6) zum Fördern der Artikel (2, 2', 2", 2"'),
mit einem Ausrichtmittel zum Ausrichten mindestens eines zur Perforation der Artikel (2, 2', 2", 2"') geeigneten energiereichen Strahls (10a, 10b) im wesentlichen von der Rotationsachse (4) ausgehend radial nach außen,
mit einem ersten Umlenkmittel (20a, 20b, 20c, 20d, 20e) zum Umlenken des Strahls (10a, 10b) außerhalb des Trommelumfangs in eine im wesentlichen parallel zum Trommelumfang verlaufende Richtung, und
mit einem zweiten Umlenkmittel (22a, 22b, 22c, 22d, 22e, 22f, 22g, 22h, 22i, 22j) zum Umlenken des Strahls (10a, 10b) außerhalb des Trommelumfangs in einem wesentlichen senkrecht zum Trommelumfang verlaufende Richtung zur Perforation der Artikel (2, 2', 2", 2'"),
mit einer Fokussieroptik (24, 24a, 24b, 24c, 24d, 24e, 24f, 24g, 24h, 24i, 24j) zum Fokussieren des in Richtung auf den Trommelumfang umgelenkten Strahls (10a, 10b) auf mindestens einen im wesentlichen raumfesten Brennpunkt, der derart positioniert ist, dass die von der Trommel (6) auf ihrem Umfang getragenen Artikel (2, 2', 2", 2"') derart durch den Brennpunkt hindurchgefördert werden können, dass von dem Strahl (10a, 10b) ein Loch (30) in die Artikel (2, 2', 2", 2"') perforierbar ist,
wobei die Ausrichtmittel (8) einen mit seinen Oberflächen im wesentlichen durch die Rotationsachse (4) der Trommel (6) und um eine zur Rotationsachse (4) der Trommel (6) parallele Achse rotierbaren Polygonspiegel (8) zum Ausrichten des Strahls (10a, 10b) von der Rotationsachse (4) ausgehend nach außen und zum Verschwenken des Strahls (10a, 10b) um die Rotationsachse (4) aufweisen,
mit mindestens einer Optik (18a, 18b, 18c, 18d, 18e) zum Abbilden des von der Rotationsachse (4) ausgehenden Strahls (10a, 10b), wobei der Fokus der Optik (18a, 18b, 18c, 18d, 18e) im wesentlichen auf der in der Rotationsachse (4) liegenden Linie liegt,
wobei die Optik (18a, 18b, 18c, 18d, 18e) eine zweite, bevorzugt raumfeste, Zylinderlinse (18a, 18b, 18c, 18d, 18e) aufweist zum Umformen einer Schwenkbewegung des Strahls (10a, 10b) um die Rotationsachse (4) in eine Parallelverschiebung des Strahls (10a, 10b),
wobei die zweite Zylinderlinse (18a, 18b, 18c, 18d, 18e) und die Fokussieroptik (24, 24a, 24b, 24c, 24d, 24e, 24f, 24g, 24h, 24i, 24j) derart ausgebildet und aufeinander abgestimmt sind, dass durch die von der zweiten Zylinderlinse (18a, 18b, 18c, 18d, 18e) erzeugte Parallelverschiebung des Strahls (10a, 10b) von der Fokussieroptik (24, 24a, 24b, 24c, 24d, 24e, 24f, 24g, 24h, 24i, 24j) mindestens zwei, bevorzugt fünf, in Rotationsrichtung der Trommel (6) hintereinander liegende Brennpunkte erzeugbar sind.

21. Vorrichtung nach Anspruch 20,
mit Mitteln (12), die den Strahl (10a, 10b) im wesentlichen senkrecht zur Rotationsachse (4) zur Verfügung stellen.

22. Vorrichtung nach dem vorstehenden Anspruch,
wobei die Mittel (12) eine erste, bevorzugt raumfeste, Zylinderlinse (12) aufweisen, die den Strahl (10a, 10b) auf eine im wesentlichen in der Rotationsachse (4) liegende Linie fokussiert.

23. Vorrichtung nach einem der Ansprüche 20-22,
wobei der Polygonspiegel (8) entgegen der Rotationsrichtung der Trommel (6) rotierbar ist.

24. Vorrichtung nach einem der vorstehenden Ansprüche 20-23,
wobei der Strahl (10a, 10b) zwischen den Brennpunkten abschaltbar ist.

25. Vorrichtung nach einem der Ansprüche 20-24,
wobei der Polygonspiegel (8) mehrere Facetten (14) aufweist, deren Anzahl derart gewählt ist, dass bei einem Auftreffen des Strahls (10a, 10b) auf eine bestimmte Facette (14) der Strahl (10a, 10b) während der Rotation des Polygonspiegels (8) um einen bestimmten Winkel um die Rotationsachse (4) herum verschwenkt wird.

26. Vorrichtung nach Anspruch 25,
wobei der Polygonspiegel (8) ein acht Facetten (14) aufweist, so dass der Strahl (10a, 10b) während seines Aufenthalts auf einer Facette (14) um 90° um die Rotationsachse (4) verschwenkbar ist.

27. Vorrichtung nach dem vorstehenden Anspruch,
mit fünf jeweils eine zweite Zylinderlinse (18a, 18b, 18c, 18d, 18e) aufweisenden Optiken (18a, 18b, 18c, 18d, 18e) zum Abbilden des von der Rotationsachse (4) ausgehenden Strahls (10a, 10b) auf die ersten Umlenkmittel (20a, 20b, 20c, 20d, 20e) während des Verschwenkens des Strahls (10a, 10b) während des Aufenthalts des Strahls (10a, 10b) auf einer Facette (14) des Polygonspiegels (8), wobei der jeweilige Fokus jeder der zweiten Zylinderlinsen (18a, 18b, 18c, 18d, 18e) im wesentlichen auf der in der Rotationsachse (4) liegenden Linie liegt.

28. Vorrichtung nach dem vorstehenden Anspruch,
wobei der Strahl (10a, 10b) während des Übergangs von einer der zweiten Zylinderlinsen (18a, 18b, 18c, 18d, 18e) zur nächsten abschaltbar ist.

29. Vorrichtung nach einem der Ansprüche 20-28,
wobei der Polygonspiegel (8) derart ausgebildet ist, dass der Strahl (10a, 10b), nach dem Verschwenken um einen bestimmten Winkel um die Rotationsachse (4) herum während seines Aufenthalts auf einer Facette (14) des Polygonspiegels (8), beim Übergang auf die nachfolgende Facette (14) wieder an seine Ursprungsposition zurückverschwenkt wird.

30. Vorrichtung nach dem vorstehenden Anspruch,
wobei der Strahl (10a, 10b) während des Übergangs von einer Facette (14) auf die nächste abschaltbar ist.

31. Vorrichtung nach einem der Ansprüche 20-30,
wobei die Rotationsgeschwindigkeiten von Polygonspiegel (8) und Trommel (6), der Umfang der Trommel (6) und der Abstand der Artikel (2, 2', 2", 2"') auf dem Umfang der Trommel (6) und die Anzahl der Facetten (14) des Polygonspiegels (8) derart aufeinander abgestimmt sind, dass während einer Verschwenkbewegung des Strahls (10a, 10b) während des Aufenthalts des Strahls (10a, 10b) auf einer Facette (14) des rotierenden Polygonspiegels (8) nur der erste, dritte, fünfte, usw. Artikel (2, 2', 2", 2"') in dem während dieser Verschwenkbewegung von dem Strahl (10a, 10b) überstrichenen Winkelbereich perforierbar ist, so dass die auf die perforierten Artikel (2, 2', 2", 2"') jeweils nachfolgenden Artikel (2, 2', 2", 2"') erst während einer darauffolgenden Verschwenkbewegung auf der darauffolgenden Facette (14) des Polygonspiegels (8) perforierbar sind.

32. Vorrichtung nach dem vorstehenden Anspruch,
wobei die Abstimmung derart ist, dass die während der bestimmten Verschwenkbewegung des Strahls (10a, 10b) nicht perforierten Artikel (2, 2', 2", 2"'), frühestens bis zum Beginn der darauffolgenden Verschwenkbewegung, jedoch spätestens beim Eintreffen des Artikels (2, 2', 2", 2"') unter der für den direkt vorauseilenden Artikel (2, 2', 2", 2"') verwendeten Fokussieroptik (24, 24a, 24b, 24c, 24d, 24e, 24f, 24g, 24h, 24i, 24j), unter jeweils die zuvor für den direkt vorauseilenden Artikel (2, 2', 2", 2"') aktiven Fokussieroptiken (24, 24a, 24b, 24c, 24d, 24e, 24f, 24g, 24h, 24i, 24j) gefördert werden, um ihrerseits perforiert zu werden.

33. Vorrichtung nach dem vorstehenden Anspruch,
wobei die Abstimmung derart ist, dass jeder durch den mindestens einen raumfesten Brennpunkt einer Fokussieroptik (24, 24a, 24b, 24c, 24d, 24e, 24f, 24g, 24h, 24i, 24j) hindurch geförderte Artikel (2, 2', 2", 2"') an diesem Brennpunkt perforierbar ist.

34. Vorrichtung nach einem der Ansprüche 20-33,
mit einem Rotationsmittel zum Rotieren der Artikel (2, 2', 2", 2"'), bevorzugt einmal, weiter bevorzugt dreimal um 360°, um ihre Längsachse während ihres Aufenthalts auf der Trommel (6).

35. Vorrichtung nach einem der vier vorstehenden Ansprüche,
wobei die Abstimmung derart ist, dass der Strahl (10a, 10b) um die Rotationsachse (4) um einen bestimmten Winkel verschwenkbar ist, während mit Hilfe der Rotationsmittel die Artikel (2, 2', 2", 2"') während ihres Aufenthalts in dem dem bestimmten Winkel entsprechenden Verschwenkbereich des Strahls (10a, 10b) mindestens um 360° um ihre Längsachse rotierbar sind, so dass unter jeder Fokussieroptik (24, 24a, 24b, 24c, 24d, 24e, 24f, 24g, 24h, 24i, 24j) ein anderer Umfangsabschnitt der Artikel (2, 2', 2", 2"') perforierbar ist.

36. Vorrichtung nach einem der Ansprüche 20-35,
wobei mindestens zwei im wesentlichen parallele Strahlen (10a, 10b) vorgesehen sind, um mindestens zwei parallel verlaufende Perforationsspuren auf den Artikeln (2, 2', 2", 2"') zu erzeugen.

37. Vorrichtung nach dem vorstehenden Anspruch,
wobei die zweiten Umlenkmittel (22a, 22b, 22c, 22d, 22e, 22f, 22g, 22h, 22i, 22j) derart ausgebildet sind, dass die mindestens zwei Strahlen (10a, 10b) leicht konvergierend in die im wesentlichen senkrecht zum Trommelumfang verlaufende Richtung umlenkbar sind.

38. Vorrichtung nach einem der Ansprüche 20-37,
wobei der mindestens eine Strahl (10a, 10b) einen im wesentlichen kreisförmigen Querschnitt aufweist.

39. Vorrichtung nach einem der Ansprüche 20-38,
wobei das erste Umlenkmittel (20a, 20b, 20c, 20d, 20e) einen raumfesten, außerhalb des Trommelumfangs liegenden ersten Umlenkspiegel (20a, 20b, 20c, 20d, 20e) aufweist.

40. Vorrichtung nach einem der Ansprüche 20-39,
wobei das zweite Umlenkmittel (22a, 22b, 22c, 22d, 22e, 22f, 22g, 22h, 22i, 22j) einen raumfesten, außerhalb des Trommelumfangs liegenden zweiten Umlenkspiegel (22a, 22b, 22c, 22d, 22e, 22f, 22g, 22h, 22i, 22j) aufweist.

41. Vorrichtung nach einem der Ansprüche 20-40,
wobei die Fokussieroptik (24, 24a, 24b, 24c, 24d, 24e, 24f, 24g, 24h, 24i, 24j) eine sphärische Linse (24, 24a, 24b, 24c, 24d, 24e, 24f, 24g, 24h, 24i, 24j) aufweist.

## Claims

1. Method for perforating rod-shaped articles (2, 2', 2", 2"') of the tobacco-processing industry, having the steps of:
conveying the articles (2, 2', 2", 2"') transverse-axially by a drum (6) rotating about an axis of rotation (4) and carrying the articles (2, 2', 2", 2"') on its periphery,
providing at least one high-energy beam (10a, 10b) suitable for perforating the articles (2, 2', 2", 2",),
directing the beam (10a, 10b) radially outwards starting from the axis of rotation (4),
deflecting the beam (10a, 10b), outside the drum periphery, in a direction running substantially parallel to the drum periphery, and
deflecting the beam (10a, 10b), outside the drum periphery, in a direction running substantially perpendicularly to the drum periphery in order to perforate the articles (2, 2', 2", 2"'),
focusing the beam (10a, 10b), deflected onto the drum periphery, by a focusing optical element (24, 24a, 24b, 24c, 24d, 24e, 24f, 24g, 24h, 24i, 24j) onto at least one substantially spatially fixed focal point, and
conveying the articles (2, 2', 2", 2"') by the drum (6) in such a way through the focal point that a hole (30) is perforated in the articles (2, 2', 2", 2"') by the beam (10a, 10b),
the beam (10a, 10b) being pivoted about the axis of rotation (4),
the beam (10a, 10b) starting from the axis of rotation (4) being imaged by at least one optical element (18a, 18b, 18c, 18d, 18e), the focus of which lies substantially on the line lying in the axis of rotation (4),
the optical element (18a, 18b, 18c, 18d, 18e) transforming a pivoting movement of the beam (10a, 10b) about the axis of rotation (4) into a translation of the beam (10a, 10b),
at least two, preferably five, preferably slightly elongated, focal points which lie one behind the other in the conveying direction of the drum (6) being produced by the focusing optical element (24, 24a, 24b, 24c, 24d, 24e, 24f, 24g, 24h, 24i, 24j) through the translation of the beam (10a, 10b).

2. Method according to Claim 1,
the beam (10a, 10b) being provided perpendicularly to the axis of rotation (4).

3. Method according to one of the preceding claims,
the beam (10a, 10b) being focused onto a line lying substantially in the axis of rotation (4).

4. Method according to one of the preceding claims,
the beam (10a, 10b) being pivoted counter to the direction of rotation of the drum (6) about the axis of rotation (4).

5. Method according to one of the preceding claims,
the beam (10a, 10b) being temporarily switched off during the pivoting of the beam (10a, 10b) between the focal points.

6. Method according to one of the preceding claims,
the beam (10a, 10b) being pivoted by a specified angle, preferably by at least 35°, further preferably by at least 90°, about the axis of rotation (4).

7. Method according to one of the preceding claims,
the beam (10a, 10b) starting from the axis of rotation (4) being imaged, during a pivoting by a specified angle about the axis of rotation (4), by at least two, preferably by at least five, optical elements (18a, 18b, 18c, 18d, 18e), the respective focus of which lies substantially on the line lying in the axis of rotation (4).

8. Method according to the preceding claim,
the beam (10a, 10b) being temporarily switched off during the pivoting from one optical element (18a, 18b, 18c, 18d, 18e) to the next.

9. Method according to one of the preceding claims,
the beam (10a, 10b) being pivoted by a specified angle about the axis of rotation (4) from a specified starting position and after the pivoting being pivoted by the specified angle back to its starting position again.

10. Method according to the preceding claim,
the beam (10a, 10b) being temporarily switched off at least during the pivoting-back.

11. Method according to one of the preceding claims,
the beam (10a, 10b) being pivoted about the axis of rotation (4) by a specified angular range, and during a pivoting movement of the beam (10a, 10b) only every second article (2, 2', 2", 2"') in the specified angular range being perforated, so that the remaining articles (2, 2', 2", 2"') are not perforated until during a subsequent pivoting movement of the beam (10a, 10b).

12. Method according to one of the preceding claims,
the beam (10a, 10b) being pivoted about the axis of rotation (4) in a specified angular range, and during a specified pivoting movement of the beam (10a, 10b) only every second article (2, 2', 2", 2"') being perforated by the focusing optical elements (24, 24a, 24b, 24c, 24d, 24e, 24f, 24g, 24h, 24i, 24j) in this angular range.

13. Method according to the preceding claim,
the articles (2, 2', 2", 2"') not perforated during the specified pivoting movement of the beam (10a, 10b) being conveyed, at the earliest by the beginning of the subsequent pivoting movement, but at the latest on arrival of the article (2, 2', 2", 2"') under the focusing optical element (24, 24a, 24b, 24c, 24d, 24e, 24f, 24g, 24h, 24i, 24j) used for the article (2, 2', 2", 2"') directly ahead, under respectively the focusing optical elements (24, 24a, 24b, 24c, 24d, 24e, 24f, 24g, 24h, 24i, 24j) previously active for the article (2, 2', 2", 2"') directly ahead, in order for their part to be perforated.

14. Method according to one of the preceding claims,
each article (2, 2', 2", 2"') conveyed through the at least one spatially fixed focal point of a focusing optical element (24, 24a, 24b, 24c, 24d, 24e, 24f, 24g, 24h, 24i, 24j) being perforated at this focal point.

15. Method according to one of the preceding claims,
the beam (10a, 10b) being pivoted about the axis of rotation (4) by a specified angle and the articles (2, 2', 2", 2"') being rotated by at least 360° about their longitudinal axis during their stay in the pivoting range of the beam (10a, 10b) corresponding to the specified angle, so that a different peripheral portion of the articles (2, 2', 2", 2"') can be perforated under each focusing optical element (24, 24a, 24b, 24c, 24d, 24e, 24f, 24g, 24h, 24i, 24j).

16. Method according to one of the preceding claims,
the articles (2, 2', 2", 2"') being rotated at least once, preferably at least three times, by 360° about their longitudinal axis during their stay on the drum (6).

17. Method according to one of the preceding claims,
at least two substantially parallel beams (10a, 10b) being provided, in order to produce at least two parallel perforation tracks on the articles (2, 2', 2" 2"').

18. Method according to the preceding claim,
the at least two beams (10a, 10b) being deflected slightly convergently in the direction running substantially perpendicularly to the drum periphery.

19. Method according to one of the preceding claims,
the at least one beam (10a, 10b) being provided with a substantially circular cross-section.

20. Apparatus for perforating rod-shaped articles (2, 2', 2", 2"') of the tobacco-processing industry, having:
a drum (6), rotating about an axis of rotation (4) and carrying the articles (2, 2', 2", 2"') transverse-axially on its periphery, for conveying the articles (2, 2', 2", 2"'),
having an orienting means for orienting at least one high-energy beam (10a, 10b), suitable for perforating the articles (2, 2', 2", 2"'), substantially radially outwards starting from the axis of rotation (4), having a first deflecting means (20a, 20b, 20c, 20d, 20e) for deflecting the beam (10a, 10b), outside the drum periphery, in a direction running substantially parallel to the drum periphery, and
having a second deflecting means (22a, 22b, 22c, 22d, 22e, 22f, 22g, 22h, 22i, 22j) for deflecting the beam (10a, 10b), outside the drum periphery, in a direction running substantially perpendicularly to the drum periphery in order to perforate the articles (2, 2', 2" 2"')
having a focusing optical element (24, 24a, 24b, 24c, 24d, 24e, 24f, 24g, 24h, 24i, 24j) for focusing the beam (10a, 10b), deflected in the direction of the drum periphery, onto at least one substantially spatially fixed focal point which is positioned in such a way that the articles (2, 2', 2", 2"') carried by the drum (6) on its periphery can be conveyed in such a way through the focal point that a hole (30) can be perforated in the articles (2, 2', 2", 2"') by the beam (10a, 10b),
the orienting means (8) having a polygonal mirror (8), with its surfaces rotatable substantially through the axis of rotation (4) of the drum (6) and about an axis parallel to the axis of rotation (4) of the drum (6), for orienting the beam (10a, 10b) outwards starting from the axis of rotation (4) and for pivoting the beam (10a, 10b) about the axis of rotation (4), having at least one optical element (18a, 18b, 18c, 18d, 18e) for imaging the beam (10a, 10b) starting from the axis of rotation (4), the focus of the optical element (18a, 18b, 18c, 18d, 18e) lying substantially on the line lying in the axis of rotation (4),
the optical element (18a, 18b, 18c, 18d, 18e) having a second, preferably spatially fixed, cylindrical lens (18a, 18b, 18c, 18d, 18e) for transforming a pivoting movement of the beam (10a, 10b) about the axis of rotation (4) into a translation of the beam (10a, 10b),
the second cylindrical lens (18a, 18b, 18c, 18d, 18e) and the focusing optical element (24, 24a, 24b, 24c, 24d, 24e, 24f, 24g, 24h, 24i, 24j) being designed and coordinated with one another in such a way that at least two, preferably five, focal points which lie one behind the other in the direction of rotation of the drum (6) can be produced by the focusing optical element (24, 24a, 24b, 24c, 24d, 24e, 24f, 24g, 24h, 24i, 24j) through the translation of the beam (10a, 10b) produced by the second cylindrical lens (18a, 18b, 18c, 18d, 18e).

21. Apparatus according to Claim 20,
having means (12) which provide the beam (10a, 10b) substantially perpendicularly to the axis of rotation (4).

22. Apparatus according to the preceding claim,
the means (12) having a first, preferably spatially fixed, cylindrical lens (12) which focuses the beam (10a, 10b) onto a line lying substantially in the axis of rotation (4).

23. Apparatus according to one of Claims 20-22,
the polygonal mirror (8) being rotatable counter to the direction of rotation of the drum (6).

24. Apparatus according to one of the preceding Claims 20-23,
the beam (10a, 10b) being able to be switched off between the focal points.

25. Apparatus according to one of Claims 20-24,
the polygonal mirror (8) having a plurality of facets (14), the number of which is chosen such that, on impingement of the beam (10a, 10b) on a specified facet (14), the beam (10a, 10b) is pivoted by a specified angle about the axis of rotation (4) during the rotation of the polygonal mirror (8).

26. Apparatus according to Claim 25,
the polygonal mirror (8) having eight facets (14), so that the beam (10a, 10b) is pivotable by 90° about the axis of rotation (4) during its stay on a facet (14).

27. Apparatus according to the preceding claim,
having five optical elements (18a, 18b, 18c, 18d, 18e), each having a second cylindrical lens (18a, 18b, 18c, 18d, 18e), for imaging the beam (10a, 10b), coming from the axis of rotation (4), onto the first deflecting means (20a, 20b, 20c, 20d, 20e) during the pivoting of the beam (10a, 10b) during the stay of the beam (10a, 10b) on a facet (14) of the polygonal mirror (8), the respective focus of each of the second cylindrical lenses (18a, 18b, 18c, 18d, 18e) lying substantially on the line lying in the axis of rotation (4).

28. Apparatus according to the preceding claim,
the beam (10a, 10b) being able to be switched off during the transition from one of the second cylindrical lenses (18a, 18b, 18c, 18d, 18e) to the next.

29. Apparatus according to one of Claims 20-28,
the polygonal mirror (8) being designed in such a way that the beam (10a, 10b), after the pivoting by a specified angle about the axis of rotation (4) during its stay on a facet (14) of the polygonal mirror (8), is pivoted back to its original position again on transition to the following facet (14).

30. Apparatus according to the preceding claim,
the beam (10a, 10b) being able to be switched off during the transition from one facet (14) to the next.

31. Apparatus according to one of Claims 20-30,
the rotational speeds of polygonal mirror (8) and drum (6), the periphery of the drum (6) and the spacing of the articles (2, 2', 2", 2"') on the periphery of the drum (6) and the number of facets (14) of the polygonal mirror (8) being coordinated with one another in such a way that, during a pivoting movement of the beam (10a, 10b) during the stay of the beam (10a, 10b) on a facet (14) of the rotating polygonal mirror (8), only the first, third, fifth, etc. article (2, 2', 2", 2"') in the angular range covered by the beam (10a, 10b) during this pivoting movement can be perforated, so that the articles (2, 2', 2", 2"') respectively following the perforated articles (2, 2', 2", 2"') cannot be perforated until during a subsequent pivoting movement on the following facet (14) of the polygonal mirror (8).

32. Apparatus according to the preceding claim,
the coordination being such that the articles (2, 2', 2", 2"') not perforated during the specified pivoting movement of the beam (10a, 10b) are conveyed, at the earliest by the beginning of the subsequent pivoting movement, but at the latest on arrival of the article (2, 2', 2", 2"') under the focusing optical element (24, 24a, 24b, 24c, 24d, 24e, 24f, 24g, 24h, 24i, 24j) used for the article (2, 2', 2", 2"') directly ahead, under respectively the focusing optical elements (24, 24a, 24b, 24c, 24d, 24e, 24f, 24g, 24h, 24i, 24j) previously active for the article (2, 2', 2", 2"') directly ahead, in order for their part to be perforated.

33. Apparatus according to the preceding claim,
the coordination being such that each article (2, 2', 2", 2"') conveyed through the at least one spatially fixed focal point of a focusing optical element (24, 24a, 24b, 24c, 24d, 24e, 24f, 24g, 24h, 24i, 24j) can be perforated at this focal point.

34. Apparatus according to one of Claims 20-33,
having a rotating means for rotating the articles (2, 2', 2", 2"'), at least once, preferably at least three times, by 360° about their longitudinal axis during their stay on the drum (6).

35. Apparatus according to one of the four preceding claims,
the coordination being such that the beam (10a, 10b) is pivotable about the axis of rotation (4) by a specified angle, while with the aid of the rotating means the articles (2, 2', 2", 2"') are rotatable by at least 360° about their longitudinal axis during their stay in the pivoting range of the beam (10a, 10b) corresponding to the specified angle, so that a different peripheral portion of the articles (2, 2', 2", 2"') can be perforated under each focusing optical element (24, 24a, 24b, 24c, 24d, 24e, 24f, 24g, 24h, 24i, 24j).

36. Apparatus according to one of Claims 20-35,
at least two substantially parallel beams (10a, 10b) being provided, in order to produce at least two parallel perforation tracks on the articles (2, 2', 2" 2"').

37. Apparatus according to the preceding claim,
the second deflecting means (22a, 22b, 22c, 22d, 22e, 22f, 22g, 22h, 22i, 22j) being designed in such a way that the at least two beams (10a, 10b) can be deflected slightly convergently in the direction running substantially perpendicularly to the drum periphery.

38. Apparatus according to one of Claims 20-37,
the at least one beam (10a, 10b) having a substantially circular cross-section.

39. Apparatus according to one of Claims 20-38,
the first deflecting means (20a, 20b, 20c, 20d, 20e) having a spatially fixed first deflecting mirror (20a, 20b, 20c, 20d, 20e) lying outside the drum periphery.

40. Apparatus according to one of Claims 20-39,
the second deflecting means (22a, 22b, 22c, 22d, 22e, 22f, 22g, 22h, 22i, 22j) having a spatially fixed second deflecting mirror (22a, 22b, 22c, 22d, 22e, 22f, 22g, 22h, 22i, 22j) lying outside the drum periphery.

41. Apparatus according to one of Claims 20-40,
the focusing optical element (24, 24a, 24b, 24c, 24d, 24e, 24f, 24g, 24h, 24i, 24j) having a spherical lens (24, 24a, 24b, 24c, 24d, 24e, 24f, 24g, 24h, 24i, 24j).

## Revendications

1. Procédé pour la perforation d'articles (2, 2', 2", 2"'), en forme de tige, de l'industrie de transformation du tabac, comprenant les étapes suivantes :
les articles (2, 2', 2", 2"') sont transportés dans une direction transversale à leur axe, à l'aide d'un tambour (6) tournant autour d'un axe de rotation (4) et portant les articles (2, 2', 2", 2"') sur sa périphérie,
au moins un rayon (10a, 10b) à grande énergie, adapté pour la perforation des articles (2, 2', 2", 2"'), est mis à disposition,
le rayon (10a, 10b) est dirigé radialement vers l'extérieur, en partant de l'axe de rotation (4),
le rayon (10a, 10b) est dévié, à l'extérieur de la périphérie du tambour, dans une direction d'orientation sensiblement parallèle à la périphérie du tambour, et
le rayon (10a, 10b) est, à l'extérieur de la périphérie du tambour, dévié dans une direction d'orientation sensiblement perpendiculaire à la périphérie du tambour, en vue de la perforation des articles (2, 2', 2", 2"'),
le rayon (10a, 10b) dévié vers la périphérie du tambour, est focalisé, par une optique de focalisation (24, 24a, 24b, 24c, 24d, 24e, 24f, 24g, 24h, 24i, 24j), sur au moins un foyer sensiblement fixe dans l'espace, et
les articles (2, 2', 2", 2"') sont transportés, par le tambour (6), sur un trajet passant par le foyer, de telle manière qu'un trou (30) soit réalisé par perforation dans les articles (2, 2', 2", 2"'), par le rayon (10a, 10b),
le rayon (10a, 10b) étant déplacé par pivotement autour de l'axe de rotation (4),
le rayon (10a, 10b) partant de l'axe de rotation (4), étant reproduit par au moins une optique (18a, 18b, 18c, 18d, 18e), dont le foyer est placé sensiblement sur la ligne se situant sur l'axe de rotation (4),
l'optique (18a, 18b, 18c, 18d, 18e) transformant alors un mouvement de pivotement du rayon (10a, 10b), autour de l'axe de rotation (4), en un déplacement en translation du rayon (10a, 10b) parallèlement à lui-même,
étant précisé que par le déplacement en translation du rayon (10a,'10b) parallèlement à lui-même, sont produits, par l'optique de focalisation (24, 24a, 24b, 24c, 24d, 24e, 24f, 24g, 24h, 24i, 24j), au moins deux, de préférence cinq, foyers, de préférence légèrement oblongs, placés l'un en aval de l'autre dans le sens de transport du tambour (6).

2. Procédé selon la revendication 1,
dans lequel le rayon (10a, 10b) est mis à disposition perpendiculairement à l'axe de rotation (4).

3. Procédé selon l'une des revendications précédentes,
dans lequel le rayon (10a, 10b) est focalisé sur une ligne se situant sensiblement sur l'axe de rotation (4).

4. Procédé selon l'une des revendications précédentes,
dans lequel le rayon (10a, 10b) est déplacé par pivotement autour de l'axe de rotation (4) en sens contraire au sens de rotation du tambour (6).

5. Procédé selon la revendication précédente,
dans lequel, pendant le pivotement du rayon (10a, 10b) entre les foyers, le rayon (10a, 10b) est temporairement coupé.

6. Procédé selon l'une des revendications précédentes,
dans lequel le rayon (10a, 10b), est déplacé par pivotement d'un angle déterminé, de préférence d'au moins 35°, de façon davantage préférée d'au moins 90°, autour de l'axe de rotation (4).

7. Procédé selon l'une des revendications précédentes,
dans lequel le rayon (10a, 10b) partant de l'axe de rotation (4), est, pendant un pivotement d'un angle déterminé autour de l'axe de rotation (4), reproduit par au moins deux, de préférence par au moins cinq, optiques (18a, 18b, 18c, 18d, 18e), dont les foyers respectifs sont placés sensiblement sur la ligne se situant sur l'axe de rotation (4).

8. Procédé selon la revendication précédente,
dans lequel le rayon (10a, 10b) est coupé temporairement pendant le pivotement d'une optique (18a, 18b, 18c, 18d, 18e) à la suivante.

9. Procédé selon l'une des revendications précédentes,
dans lequel le rayon (10a, 10b), est déplacé par pivotement d'un angle déterminé autour de l'axe de rotation (4), à partir d'une position initiale déterminée, et est, après le pivotement, ramené à sa position initiale par un pivotement de retour sur l'angle déterminé.

10. Procédé selon la revendication précédente,
dans lequel le rayon (10a, 10b) est coupé temporairement au moins pendant le pivotement de retour.

11. Procédé selon l'une des revendications précédentes,
dans lequel le rayon (10a, 10b) est déplacé par pivotement sur une plage angulaire déterminée, autour de l'axe de rotation (4), et dans lequel, pendant un mouvement de pivotement du rayon (10a, 10b), un article (2, 2', 2", 2"') sur deux, seulement, est perforé dans la plage angulaire déterminée, de sorte que les articles restants (2, 2', 2", 2"') ne sont perforés que pendant un mouvement de pivotement, faisant suite au précédent, du rayon (10a, 10b).

12. Procédé selon l'une des revendications précédentes,
dans lequel le rayon (10a, 10b) est déplacé par pivotement dans une plage angulaire déterminée, autour de l'axe de rotation (4), et dans lequel, pendant un mouvement de pivotement déterminé du rayon (10a, 10b), un article (2, 2', 2", 2"') sur deux, seulement, est perforé dans cette plage angulaire, à travers les optiques de focalisation (24, 24a, 24b, 24c, 24d, 24e, 24f, 24g, 24h, 24i, 24j).

13. Procédé selon la revendication précédente,
dans lequel les articles (2, 2', 2", 2"'), qui ne sont pas perforés pendant le mouvement de pivotement déterminé du rayon (10a, 10b), sont, au plus tôt jusqu'au commencement du mouvement de pivotement qui lui fait suite, mais au plus tard à l'arrivée de l'article (2, 2', 2", 2"') sous l'optique de focalisation (24, 24a, 24b, 24c, 24d, 24e, 24f, 24g, 24h, 24i, 24j) employée pour l'article (2, 2', 2", 2"') situé juste devant, transportés sous les optiques respectives de focalisation (24, 24a, 24b, 24c, 24d, 24e, 24f, 24g, 24h, 24i, 24j) auparavant actives pour l'article situé juste devant, afin d'être perforés à leur tour.

14. Procédé selon l'une des revendications précédentes,
dans lequel chaque article (2, 2', 2", 2"') transporté sur un trajet passant par le au moins un foyer, fixe dans l'espace, d'une optique de focalisation (24, 24a, 24b, 24c, 24d, 24e, 24f, 24g, 24h, 24i, 24j), est perforé au niveau de ce foyer.

15. Procédé selon l'une des revendications précédentes,
dans lequel le rayon (10a, 10b) est déplacé par pivotement autour de l'axe de rotation (4), d'un angle déterminé, et les articles (2, 2', 2", 2"'), durant le temps qu'ils demeurent dans la plage de pivotement, correspondant à l'angle déterminé, du rayon (10a, 10b), subissent une rotation autour de leur axe longitudinal, sur au moins 360°, afin que sous chaque optique de focalisation (24, 24a, 24b, 24c, 24d, 24e, 24f, 24g, 24h, 24i, 24j), un secteur circonférentiel différent des articles (2, 2', 2", 2"') puisse être perforé.

16. Procédé selon l'une des revendications précédentes,
dans lequel les articles (2, 2', 2", 2"'), durant leur séjour sur le tambour (6), sont tournés au moins une fois, de préférence trois fois, sur 360°, autour de leur axe longitudinal.

17. Procédé selon l'une des revendications précédentes,
dans lequel au moins deux rayons (10a, 10b), sensiblement parallèles, sont mis à disposition, pour produire sur les articles (2, 2', 2", 2"'), au moins deux tracés de perforations s'étendant parallèlement l'un à l'autre.

18. Procédé selon la revendication précédente,
dans lequel les au moins deux rayons (10a, 10b) sont déviés, en convergeant légèrement, dans la direction d'orientation sensiblement perpendiculaire à la périphérie du tambour.

19. Procédé selon l'une des revendications précédentes,
dans lequel le au moins un rayon (10a, 10b) est mis à disposition sous une section transversale sensiblement circulaire.

20. Dispositif pour la perforation d'articles (2, 2', 2", 2"'), en forme de tige, de l'industrie de transformation du tabac, comprenant :
un tambour (6) portant les articles (2, 2', 2", 2"') sur sa périphérie, suivant un positionnement transversal à leur axe, et tournant autour d'un axe de rotation (4), afin de transporter les articles (2, 2', 2", 2"'),
un moyen d'orientation destiné à orienter au moins un rayon (10a, 10b) à grande énergie, adapté pour la perforation des articles (2, 2', 2", 2"'), dans une direction sensiblement radiale, vers l'extérieur, en partant de l'axe de rotation (4),
un premier moyen de déviation (20a, 20b, 20c, 20d, 20e) destiné à dévier le rayon (10a, 10b), à l'extérieur de la périphérie du tambour, dans une direction d'orientation sensiblement parallèle à la périphérie du tambour, et
un deuxième moyen de déviation (22a, 22b, 22c, 22d, 22e, 22f, 22g, 22h, 22i, 22j) destiné à dévier le rayon (10a, 10b), à l'extérieur de la périphérie du tambour, dans une direction d'orientation sensiblement perpendiculaire à la périphérie du tambour, en vue de la perforation des articles (2, 2', 2", 2"'),
une optique de focalisation (24, 24a, 24b, 24c, 24d, 24e, 24f, 24g, 24h, 24i, 24j), destinée à focaliser le rayon (10a, 10b), dévié en direction de la périphérie du tambour, sur au moins un foyer sensiblement fixe dans l'espace, qui est positionné de telle façon que les articles (2, 2', 2", 2"') portés par le tambour (6), sur sa périphérie, puissent être transportés sur un trajet passant par le foyer d'une manière telle, qu'un trou (30) puisse être réalisé, par perforation, dans les articles (2, 2', 2", 2"'), par le rayon (10a, 10b),
les moyens d'orientation (8) présentant un miroir polygonal (8) pouvant être entraîné en rotation en passant sensiblement à travers l'axe de rotation (4) du tambour (6), par ses surfaces libres, et au tour d'un axe parallèle à l'axe de rotation (4) du tambour (6), pour orienter le rayon (10a, 10b) vers l'extérieur, en partant de l'axe de rotation (4), et pour faire pivoter le rayon (10a, 10b) autour de l'axe de rotation (4),
au moins une optique (18a, 18b, 18c, 18d, 18e) destinée à reproduire le rayon (10a, 10b) partant de l'axe de rotation (4), le foyer de l'optique (18a, 18b, 18c, 18d, 18e) étant alors placé sensiblement sur la ligne située sur l'axe de rotation (4),
l'optique (18a, 18b, 18c, 18d, 18e) présentant une deuxième lentille cylindrique (18a, 18b, 18c, 18d, 18e), de préférence fixe dans l'espace, destinée à transformer un mouvement de pivotement du rayon (10a, 10b), autour de l'axe de rotation (4), en un déplacement en translation du rayon (10a, 10b) parallèlement à lui-même,
la deuxième lentille cylindrique (18a, 18b, 18c, 18d, 18e) et l'optique de focalisation (24, 24a, 24b, 24c, 24d, 24e, 24f, 24g, 24h, 24i, 24j) étant conçues et adaptées l'une sur l'autre d'une manière telle, que par le déplacement en translation du rayon (10a, 10b) parallèlement à lui-même, engendré par la deuxième lentille cylindrique (18a, 18b, 18c, 18d, 18e), au moins deux, de préférence cinq, foyers placés l'un en aval de l'autre dans le sens de rotation du tambour (6), puissent être engendrés par l'optique de focalisation (24, 24a, 24b, 24c, 24d, 24e, 24f, 24g, 24h, 24i, 24j).

21. Dispositif selon la revendication 20,
comprenant des moyens (12) qui mettent à disposition le rayon (10a, 10b) suivant une orientation sensiblement perpendiculaire à l'axe de rotation (4).

22. Dispositif selon la revendication précédente,
dans lequel les moyens (12) présentent une première lentille cylindrique (12), de préférence fixe dans l'espace, qui focalise le rayon (10a, 10b) sur une ligne se situant sensiblement sur l'axe de rotation (4).

23. Dispositif selon l'une des revendications 20 à 22,
dans lequel le miroir polygonal (8) peut être entraîné en rotation en sens contraire au sens de rotation du tambour (6).

24. Dispositif selon l'une des revendications précédentes 20 à 23,
dans lequel le rayon (10a, 10b) peut être coupé entre les foyers.

25. Dispositif selon l'une des revendications 20 à 24,
dans lequel le miroir polygonal (8) présente plusieurs facettes (14), dont le nombre est choisi de telle manière que, lors d'un impact du rayon (10a, 10b) sur une facette (14) déterminée, le rayon (10a, 10b) subisse, durant la rotation du miroir polygonal (8), un pivotement d'un angle déterminé autour de l'axe de rotation (4).

26. Dispositif selon la revendication 25,
dans lequel le miroir polygonal (8) présente huit facettes (14), de sorte que le rayon (10a, 10b) peut, pendant le temps qu'il demeure sur une facette (14), subir un pivotement de 90° autour de l'axe de rotation (4).

27. Dispositif selon la revendication précédente,
comprenant cinq optiques (18a, 18b, 18c, 18d, 18e) présentant chacune une deuxième lentille cylindrique (18a, 18b, 18c, 18d, 18e), pour reproduire le rayon (10a, 10b) partant de l'axe de rotation (4), en direction du premier moyen de déviation (20a, 20b, 20c, 20d, 20e) durant le pivotement du rayon (10a, 10b), pendant le temps que le rayon (10a, 10b) demeure sur une facette (14) du miroir polygonal (8), le foyer respectif de chacune des deuxièmes lentilles cylindriques (18a, 18b, 18c, 18d, 18e) étant alors placé sensiblement sur la ligne se situant sur l'axe de rotation (4).

28. Dispositif selon la revendication précédente,
dans lequel le rayon (10a, 10b) peut être coupé pendant le passage de l'une des deuxièmes lentilles cylindriques (18a, 18b, 18c, 18d, 18e) à la suivante.

29. Dispositif selon l'une des revendications 20 à 28,
dans lequel le miroir polygonal (8) est conçu d'une manière telle, que le rayon (10a, 10b), après le pivotement d'un angle déterminé autour de l'axe de rotation (4), soit, pendant le temps qu'il demeure sur une facette (14) du miroir polygonal (8), ramené à sa position d'origine, par un pivotement de retour, lors du passage à la facette (14) qui suit.

30. Dispositif selon la revendication précédente,
dans lequel le rayon (10a, 10b) peut être coupé pendant le passage d'une facette (14) à la suivante.

31. Dispositif selon l'une des revendications 20 à 30,
dans lequel les vitesses de rotation du miroir polygonal (8) et du tambour (6), la circonférence du tambour (6) et l'espacement des articles (2, 2', 2", 2"') sur la périphérie du tambour (6) ainsi que le nombre des facettes (14) du miroir polygonal (8), sont adaptés entre eux d'une manière elle, que durant un mouvement de pivotement du rayon (10a, 10b), pendant le temps que le rayon (10a, 10b) demeure sur une facette (14) du miroir polygonal (8) en rotation, seul le premier, le troisième, le cinquième, etc., article (2, 2', 2", 2"') puisse être perforé dans la plage angulaire balayée par le rayon (10a, 10b) durant ce mouvement de pivotement, de sorte que les articles (2, 2', 2", 2"') qui suivent respectivement les articles perforés (2, 2', 2", 2"'), ne peuvent être perforés que durant un mouvement de pivotement immédiatement consécutif sur la facette (14), immédiatement consécutive, du miroir polygonal (8).

32. Dispositif selon la revendication précédente,
dans lequel l'adaptation est réalisée d'une manière telle, que les articles (2, 2', 2", 2"'), qui ne sont pas perforés pendant le mouvement de pivotement déterminé du rayon (10a, 10b), soient, au plus tôt jusqu'au commencement du mouvement de pivotement consécutif à ce dernier, mais au plus tard à l'arrivée de l'article (2, 2', 2", 2"') sous l'optique de focalisation (24, 24a, 24b, 24c, 24d, 24e, 24f, 24g, 24h, 24i, 24j) employée pour l'article (2, 2', 2", 2"') situé juste devant, transportés sous les optiques respectives de focalisation (24, 24a, 24b, 24c, 24d, 24e, 24f, 24g, 24h, 24i, 24j) auparavant actives pour l'article situé juste devant, afin d'être perforés à leur tour.

33. Dispositif selon la revendication précédente,
dans lequel l'adaptation est réalisée d'une manière telle, que chaque article (2, 2', 2", 2"') transporté sur un trajet passant par le au moins un foyer, fixe dans l'espace, d'une optique de focalisation (24, 24a, 24b, 24c, 24d, 24e, 24f, 24g, 24h, 24i, 24j), puisse être perforé au niveau de ce foyer.

34. Dispositif selon l'une des revendications 20 à 33,
comprenant un moyen d'entraînement en rotation destiné à faire tourner les articles (2, 2', 2", 2"'), de préférence une fois, de façon davantage préférée trois fois, sur 360°, autour de leur axe longitudinal, durant leur séjour sur le tambour (6).

35. Dispositif selon l'une des quatre revendications précédentes,
dans lequel l'adaptation est réalisée d'une manière telle, que le rayon (10a, 10b) puisse subir un pivotement d'un angle déterminé autour de l'axe de rotation (4), pendant qu'à l'aide du moyen d'entraînement en rotation, les articles (2, 2', 2", 2"'), durant le temps qu'ils demeurent dans la plage de pivotement, correspondant à l'angle déterminé, du rayon (10a, 10b), peuvent subir une rotation autour de leur axe longitudinal, sur au moins 360°, afin que sous chaque optique de focalisation (24, 24a, 24b, 24c, 24d, 24e, 24f, 24g, 24h, 24i, 24j), un secteur circonférentiel différent des articles (2, 2', 2", 2"') puisse être perforé.

36. Dispositif selon l'une des revendications 20 à 35,
dans lequel au moins deux rayons (10a, 10b), sensiblement parallèles, sont prévus, pour produire sur les articles (2, 2', 2", 2"'), au moins deux tracés de perforations s'étendant parallèlement l'un à l'autre.

37. Dispositif selon la revendication précédente,
dans lequel les deuxièmes moyens de déviation (22a, 22b, 22c, 22d, 22e, 22f, 22g, 22h, 22i, 22j) sont conçus d'une manière telle, que les au moins deux rayons (10a, 10b) puissent être déviés, en convergeant légèrement, dans la direction d'orientation sensiblement perpendiculaire à la périphérie du tambour.

38. Dispositif selon l'une des revendications 20 à 37,
dans lequel le au moins un rayon (10a, 10b) présente une section transversale sensiblement circulaire.

39. Dispositif selon l'une des revendications 20 à 38,
dans lequel le premier moyen de déviation (20a, 20b, 20c, 20d, 20e) présente un premier miroir déviateur (20a, 20b, 20c, 20d, 20e), fixe dans l'espace, situé à l'extérieur de la périphérie du tambour.

40. Dispositif selon l'une des revendications 20 à 39,
dans lequel le deuxième moyen de déviation (22a, 22b, 22c, 22d, 22e, 22f, 22g, 22h, 22i, 22j) présente un deuxième miroir déviateur (22a, 22b, 22c, 22d, 22e, 22f, 22g, 22h, 22i, 22j), fixe dans l'espace, situé à l'extérieur de la périphérie du tambour.

41. Dispositif selon l'une des revendications 20 à 40,
dans lequel l'optique de focalisation (24, 24a, 24b, 24c, 24d, 24e, 24f, 24g, 24h, 24i, 24j) présente une lentille sphérique (24, 24a, 24b, 24c, 24d, 24e, 24f, 24g, 24h, 24i, 24j).
